# FASCICULE DE BREVET EUROPEEN

(11) **EP 0 556 105 B1**
(45) Date de publication et mention de la délivrance du brevet: **19.05.1999**
(21) Numéro de dépôt: 93400307.0
(22) Date de dépôt: 08.02.1993
(51) Int. Cl.: H04B 10/20

(54) **Bus optique à architecture circulaire et méthode d'accès à ce bus**
Kreisförmiger optischer Bus und Zugriffsverfahren dafür
Circular optical bus and corresponding access method

(30) Priorité: 11.02.1992 FR 9201520
(43) Date de publication de la demande: 18.08.1993
(73) Titulaire: ROBERT BOSCH (FRANCE) SA, 93400 Saint-Ouen (FR)
(72) Inventeur: Picandet, Jean A., F-75020 Paris (FR)
(74) Mandataire: Joly, Jean-Jacques

(56) Documents cités:
- US-A- 4 628 501
- US-A- 5 023 463
- JOURNAL OF LIGHTWAVE TECHNOLOGY. vol. 5, no. 12, Décembre 1987, NEW YORK US pages 1782 - 1794 HABBAB ET AL 'Protocols for Very High-Speed Optical Fiber Local Area Networks Using a Passive Star Topology'

## Description

La présente invention concerne un bus optique pour la transmission d'informations entre plusieurs cartes d'un ensemble électronique, présentant une architecture circulaire et destiné principalement à une utilisation dans le domaine des réseaux à large bande. Elle concerne également une méthode d'accès à ce bus.

La complexification des applications dans tous les secteurs assistés par ordinateurs et notamment dans le domaine du traitement d'images a amené le développement de calculateurs de plus en plus rapides souvent à architecture parallèle dont les performances se sont toutefois trouvées limitées du fait de l'emploi d'un bus électrique classique au niveau des liaisons entre les différents processeurs pouvant constituer ce calculateur.

En matière de commutation rapide, des limitations dues à l'utilisation d'un tel bus sont aussi présentes et sont d'ailleurs bien connues. Il s'agit notamment par exemple de la diaphonie, de l'écho ou bien de l'augmentation avec la fréquence de la puissance consommée.

Diverses solutions ont été proposées pour pallier ces inconvénients. L'une des plus intéressantes est le recours à un bus optique dont la réalisation à ce jour repose sur deux techniques distinctes basées l'une sur la transmission libre dans un guide optique et l'autre sur la transmission dans l'air. Dans la première technique le bus est constitué d'un guide optique plan en verre ou en silicium à la surface duquel sont montés plusieurs processeurs comportant chacun un émetteur et un capteur de lumière. Lorsqu'un processeur veut envoyer un signal, la lumière émise par l'émetteur correspondant s'engage dans le guide optique et, entièrement réfléchie par les surfaces internes de ce guide, se déplace à l'intérieur de celui-ci en direction des capteurs de lumière des autres processeurs. Cette technique particulièrement bien adaptée lorsqu'il s'agit de relier plusieurs processeurs sur une même carte devient beaucoup plus complexe à mettre en oeuvre entre processeurs de cartes différentes. C'est pourquoi, dans ce cas, on a recours le plus souvent à la seconde technique, c'est-à-dire la transmission dans l'air.

Ainsi, le document de brevet DE-3 739 629 montre un ensemble de cartes montées dans un châssis et reliées entre elles par un bus optique.

Un émetteur et un récepteur optique sont disposés de part et d'autre de chaque carte dans un même plan pour former un axe unique sur lequel seront véhiculées les informations. Toutefois, cette transmission linéaire entre les cartes présente un défaut majeur, notamment dans le cas d'interconnexion de réseaux à grand débit, à savoir la différence de temps de propagation existant entre les différents points de ce bus optique.

Pour remédier à ce défaut, il faut réaliser un bus optique susceptible de transmettre des signaux à fréquence élevée avec un bon synchronisme entre toutes les entités qui y sont raccordées.

Une solution à ce problème est donnée par un bus optique tel que décrit dans le brevet US 5 023 463 réalisant la transmission entre plusieurs cartes, ou modules d'un ensemble électronique, chaque carte ayant un ensemble d'émission électro-optique et un ensemble de réception opto-électronique, ce bus comportant un ensemble diffuseur central qui réémet simultanément vers l'ensemble de réception de chaque carte les informations qu'il reçoit d'un ensemble d'émission déterminé, ces ensembles d'émission et de réception étant disposés circulairement autour de l'ensemble diffuseur central.

Cette architecture circulaire est a priori à même d'assurer un parfait synchronisme de la transmission et donc de permettre corrélativement une simplification notable de l'électronique de traitement des informations.

Cependant, ces performances ne peuvent être réalisées avec un nombre très élevé de cartes interconnectées à ce bus. En outre, l'augmentation de rapidité que ce bus circulaire est en mesure d'apporter se trouve particulièrement limitée par la méthode d'accès mise en oeuvre pour les échanges d'informations.

Pour fournir l'accès à des bus opto-électroniques classiques reliant différents émetteurs à différents récepteurs, différentes méthodes ont été proposées. Par exemple, l'article de IEEE Communications Magazine (vol. N° 2, février 87) de Moustakas "The standardization of IEEE 802.3 Compatible Fiber Optic CSMA/CD, LAN : Physical Topologies" décrit une méthode d'accès à un tel bus basée sur le protocole CSMA/CD.

Toutefois, dans le cas du bus décrit ci-dessus, à distribution circulaire, les avantages de synchronisme et de rapidité de ce bus ne sont pas mis à profit, le code décrit étant conçu pour un temps d'accès aléatoire, avec perte de temps en cas de collision d'accès. Cette perte de temps est surtout pénalisante pour des messages courts tels que les cellules de données dans le mode de transmission ATM.

La présente invention a pour but de pallier les inconvénients précités et de réaliser un bus optique circulaire qui permette l'interconnexion d'un grand nombre de cartes et soit ainsi particulièrement adapté à la réalisation de structures complexes comme des multiplexeurs par exemple.

Un autre but de l'invention est de divulguer une méthode d'accès à ce bus mettant à profit les qualités de synchronisme de celui-ci en évitant les défauts de l'art antérieur signalés précédemment.

Ces buts sont atteints par un bus optique pour la transmission d'information entre plusieurs cartes ou modules d'un ensemble électronique, chaque carte ayant un ensemble d'émission électro-optique et un ensemble de réception opto-électronique, ce bus comportant un ensemble de distribution central qui réémet simultanément vers l'ensemble de réception de chaque carte les informations qu'il reçoit d'un ensemble d'émission déterminé, ces ensembles d'émission et de réception étant disposés circulairement autour de l'ensemble de distribution central, caractérisé en ce que lesdites informations émises par un ensemble d'émission comportent au moins des informations de données et des informations de code, lesdites informations de code étant émises sur le bus selon une loi de contention du type CSMA/CR.

Selon une caractéristique particulière, les ensembles d'émission et de réception disposés circulairement autour de l'ensemble de distribution central comportent au niveau de chaque carte respectivement au moins un émetteur de données En et un émetteur de code EBARn et au moins un récepteur de données Rn et un récepteur du code RBARn.

Selon un mode particulier de réalisation, les émetteurs En, EBARn et les récepteurs Rn, RBARn d'une même carte sont superposés, un récepteur déterminé succèdant à l'émetteur correspondant, et disposés dans un même plan radial parallèle à un axe longitudinal de l'ensemble de distribution central.

L'ensemble de distribution central comporte au moins un émetteur central de données Eg et un émetteur central de code EBAR et au moins un récepteur central de données Rg et un récepteur central de code RBAR, chaque émetteur central Eg,EBAR, respectivement récepteur central Rg, RBAR, étant placé au centre d'un miroir circulaire présentant une convergence vers la couronne des récepteurs Rn,RBARn, respectivement des émetteurs En, EBARn, des différentes cartes, un amplificateur A permettant en outre l'amplification des informations reçues, par un récepteur central Rg, RBAR et destinées à l'émetteur central Eg, EBAR correspondant.

Avantageusement, les faisceaux optiques superposés reliant les différents émetteurs En,EBARn de chaque carte aux récepteurs centraux Rg,RBAR correspondants ainsi que ceux reliant en retour les émetteurs centraux Eg,EBAR aux récepteurs Rn, RBARn de chaque carte, sont isolés optiquement entre eux par des écrans supérieur et inférieur parallèles disposés de part et d'autre de chacun de ces faisceaux optiques.

La simplicité de l'architecture proposée permet la réalisation à partir de celle-ci de circuits fonctionnant selon la technique dite à mode de transfert asynchrone ATM.

Notamment, un multiplexeur/demultiplexeur ATM comportant un bus optique caractérisé en ce que l'ensemble de distribution central qui reçoit d'une fibre optique des cellules à démultiplexer comporte : un circuit de réception qui d'une part extrait des signaux de synchronisation des cellules reçues et les transmet à toutes les cartes par l'intermédiaire d'au moins un émetteur central de synchronisation ECK,EFR et d'autre part diffuse ces cellules à toutes les cartes par l'intermédiaire de l'émetteur central de données Eg ; et un circuit de transmission qui reçoit par l'intermédiaire du récepteur central de données Rg des cellules à acheminer sur la fibre optique en provenance de l'un quelconque des émetteurs En des différentes cartes dont l'émission est validée par un circuit local d'arbitrage de bus présent au niveau de chaque carte et émettant une information de code par son émetteur de code EBARn.

De même, un commutateur ATM permettant le traitement de données organisées en cellules de p bits et comportant un bus optique caractérisé en ce que les ensembles d'émission et de réception comportent respectivement m émetteurs En et m récepteurs Rn qui coopèrent avec l'ensemble de distribution central pour permettre le transfert en parallèle de m bits d'une cellule, et des piles de départ et d'arrivée du type premier entré - premier sorti (FIFO) permettant respectivement de remplir m registres de sortie de p/m bits reliés à ces émetteurs En et de vider m registres d'entrée de p/m bits reliés à ces récepteurs Rn, m étant un diviseur entier de p ou d'un multiple de p.

De préférence, les cellules comportant 53 octets, le nombre m sera égal à 53.

Enfin, un commutateur privé multiservices (ISPBX) à large bande comportant au moins un multiplexeur/ démultiplexeur ATM relié à différents terminaux et un commutateur ATM relié notamment à un réseau à large bande.

D'autres caractéristiques et avantages de la présente invention ressortiront mieux à la lecture de la description qui va suivre, faite en référence aux dessins annexés dans lesquels :
- la figure 1 représente un ensemble électronique connu comportant un ensemble de cartes ou modules munis d'un bus optique circulaire de l'art antérieur,
- la figure 2 est un schéma de principe simplifié de l'architecture d'un bus optique selon l'invention,
- la figure 3 montre un multiplexeur/ démultiplexeur ATM mettant en oeuvre la méthode d'accès selon l'invention sur le bus optique de la figure 2,
- la figure 4 montre un commutateur ATM mettant en oeuvre la méthode d'accès selon l'invention sur le bus optique de la figure 2,
- les figures 5 et 6 montrent en détail les circuits d'entrée et de sortie d'une carte d'un commutateur ATM de la figure 4,
- la figure 7 représente l'architecture générale d'un commutateur privé multiservices intégrant notamment les ensembles des figures 3 et 4, et
- la figure 8 montre un exemple de réalisation matérielle d'un bus optique selon l'invention.

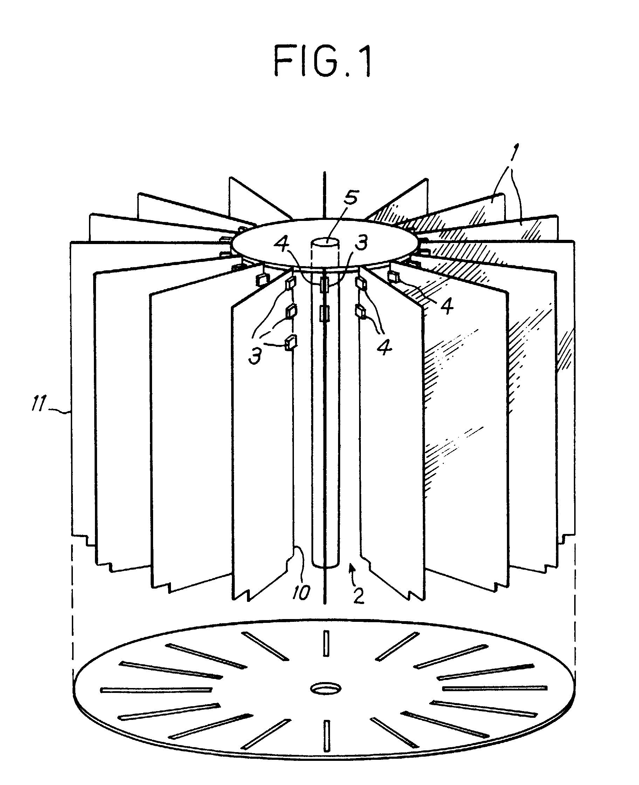

Il est fait tout d'abord référence à la figure 1 qui montre de façon simplifiée un ensemble connu de cartes et modules 1 d'un dispositif comprenant un bus optique circulaire. Ces cartes 1 sont disposées verticalement en éventail et s'inscrivent dans un cylindre tubulaire dont un espace cylindrique central 2 constitue une zone optique dans laquelle vont transiter librement dans l'air les informations échangées entre un ensemble d'émission 3 et un ensemble de réception 4 de chaque carte 1. L'ensemble d'émission 3 comporte plusieurs émetteurs E superposés et l'ensemble de réception 4 plusieurs récepteurs R également superposés. Selon le mode de réalisation mis en oeuvre émetteurs et récepteurs seront alignés dans un même plan sur chaque face de la carte ou bien superposés, émetteurs et récepteurs étant disposés en alternance. Un ensemble diffuseur central 5 placé au niveau de l'axe de la zone optique 2 assure la réception des informations émises par un ou plusieurs émetteurs E et leur retransmission vers tous les récepteurs R du plan considéré, tout en interdisant de par sa situation au centre de la zone optique toute liaison directe entre émetteurs et récepteurs. En outre, cet ensemble de diffusion est tel qu'il assure une séparation des faisceaux optiques issus de différents émetteurs E et évitent ainsi le mélange des informations émises depuis ces émetteurs. Chacun de ces faisceaux constitue au niveau de chaque cercle d'émetteurs une zone optique distincte entre laquelle les informations transiteront par l'intermédiaire de l'ensemble de diffusion central 5, d'un émetteur E d'une carte vers tous les récepteurs R des autres cartes disposés dans le même plan.

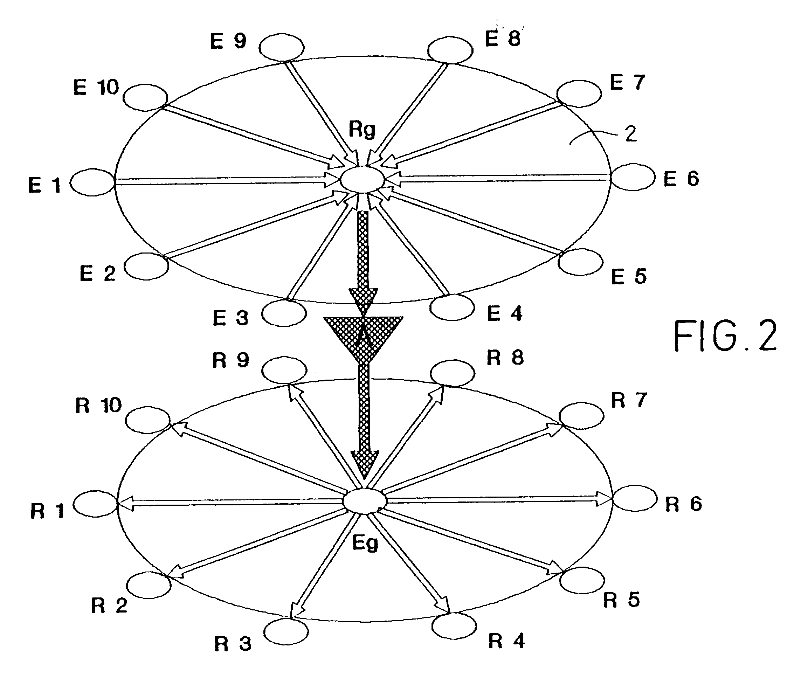

La figure 2 présente le schéma de principe de l'architecture du bus optique selon l'invention à laquelle s'applique la méthode d'accès de l'invention.

Pour la clarté de l'explication qui va suivre, le nombre des émetteurs E et des récepteurs R a été limité à dix et les cartes supports de ces émetteurs et récepteurs n'ont pas été à nouveau représentées. Dans la suite de la description, on désignera par la référence En un émetteur quelconque parmi les dix émetteurs E1 à E10 et par la référence Rn un récepteur quelconque parmi les dix récepteurs R1 à R10. Ces émetteurs et récepteurs disposés à la périphérie de la zone optique 2 forment un cercle dont le centre constitue l'ensemble de distribution central. Chaque carte "n" peut envoyer des informations vers une autre carte grâce à l'émetteur optique En correspondant et de même peut recevoir des informations par le récepteur optique Rn correspondant. Les signaux envoyés par tout émetteur En sont reçus par un récepteur optique central Rg, amplifiés par un amplificateur A et réémis par un émetteur optique central Eg à destination de tous les récepteurs Rn. L'émetteur central optique Eg, le récepteur central optique Rg et l'amplicateur A forment l'ensemble de distribution central 5.

Ainsi, toute information envoyée par l'une quelconque des cartes ou modules 1 est reçue par l'ensemble des cartes et cela en même temps du fait de la disposition circulaire des émetteurs et des récepteurs et de celle centrale de l'ensemble de distribution 5. En outre, l'amplification réalisée au niveau de l'ensemble de distribution central apporte un meilleur rendement optique au bus, permettant d'en accroître notablement les capacités. Ainsi, le nombre de cartes interconnectées à ce bus peut être beaucoup plus important que celui de l'art antérieur. Toutefois, cette réception simultanée n'est possible que si d'une part, plusieurs émetteurs n'émettent pas au même moment et d'autre part, une nouvelle émission n'est mise en oeuvre qu'une fois la précédente achevée. Aussi, pour éviter toute collision, il est nécessaire de réaliser les émissions selon une loi de contention.

Typiquement, le protocole CSMA/CR (Carrier Sense Method Access/Collision Resolution) a été retenu car il est particulièrement bien adapté à ce type de transmission d'informations. Son efficacité étant liée au temps de propagation sur le bus de contention, il a été choisi pour celui-ci une architecture identique à celle du bus optique lui-même.

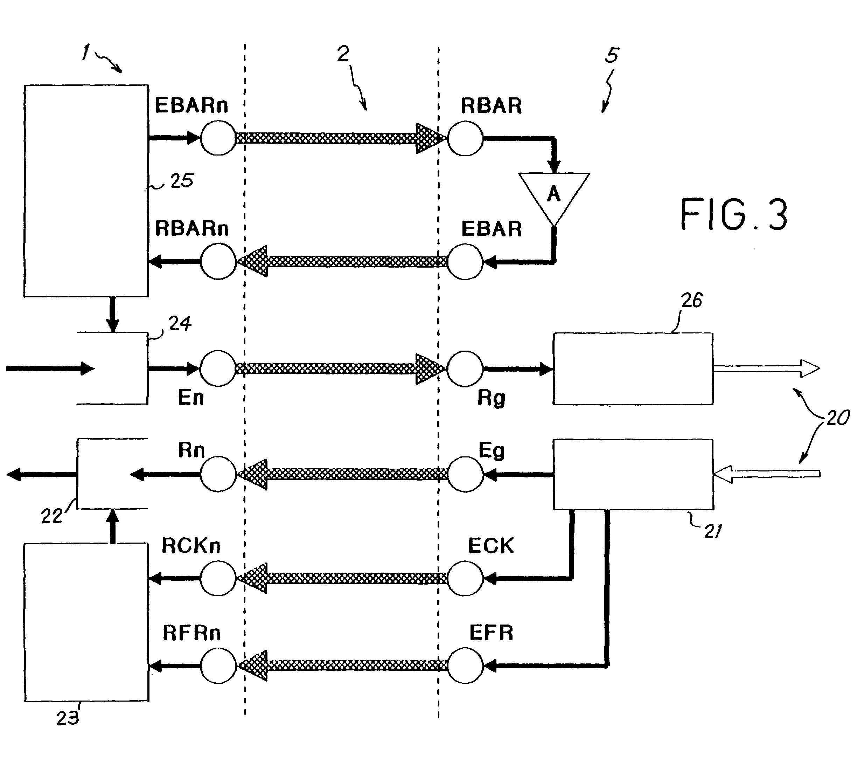

L'architecture complète intégrant celle du bus de transfert des informations que nous appellerons par la suite bus principal et celle du bus de contention sera maintenant décrite en regard de la figure 3 qui montre un exemple d'utilisation d'un tel bus optique pour la réalisation d'un multiplexeur/démultiplexeur fonctionnant selon la technique dite à mode de transfert asynchrone (ATM).

Dans un souci de simplification, il ne sera représenté qu'une carte de rang "n" en liaison avec l'ensemble de distribution central 5.

Dans la technique ATM, les informations sont véhiculées par cellules de 53 octets chacune, disposées les unes derrière les autres. Chaque cellule comporte notamment une en-tête qui spécifie le destinataire de l'information présente dans cette cellule.

Dans le multiplexeur/démultiplexeur ATM, les cellules ATM à démultiplexer sont acheminées par une fibre optique 20 et prises en compte par un circuit de réception central 21, placé au niveau de l'ensemble de distribution central 5, qui en extrait des signaux d'horloge et de début de trame.

Ce signal d'horloge est diffusé à tous les modules ou cartes via un émetteur d'horloge ECK et reçu dans chaque carte par un récepteur d'horloge RCKn. De la même manière, le signal de début de trame est émis par un émetteur de trame EFR et reçu au niveau de chaque carte par un récepteur de trame RFRn. Cette communication de ces deux signaux à l'ensemble des cartes 1 permet d'assurer un parfait synchronisme de la transmission des cellules.

Les cellules sont diffusées au niveau de l'ensemble de distribution central 5 par l'émetteur central Eg puis reçues par le récepteur Rn de chaque carte et placées dans une pile d'arrivée 22 de laquelle elles seront extraites au rythme d'une horloge locale 23, reconstituée à partir des signaux d'horloge et de trame reçus au niveau des récepteurs d'horloge RCKn et de trame RFRn, si l'adresse qu'elle comporte dans leur en-tête correspond à celle de la carte, c'est-à-dire si ces cellules lui sont destinées.

Inversement, dans chaque carte, les cellules ATM à envoyer sont placées dans une pile de départ 24 et dès qu'une cellule est prête à être envoyée, un circuit local d'arbitrage de bus 25 est averti.

Ce circuit 25 est chargé de superviser la procédure CSMA/CR de contention. A cette fin, dès l'apparition d'un signal de début de trame suivant son activation, il émet, bit après bit, son code d'accès. Ce code est émis par un émetteur de code EBARn à destination d'un récepteur central de code RBAR, amplifié par un amplificateur A et réémis par un émetteur central de code EBAR vers un récepteur de code RBARn. L'amplificateur A, l'émetteur et le récepteur central de code sont disposés dans l'ensemble de distribution central 5. Si le code reçu sur le récepteur de code RBARn est égal, bit après bit, au code émis, la cellule pourra alors, au signal de début de trame suivant, être émise, via l'émetteur En et le récepteur central Rg, vers un circuit de transmission 26 attaquant la fibre de sortie 20.

Au cas où le code d'accès serait écrasé par un autre code émis simultanément par une autre carte, la carte considérée stoppe immédiatement son émission et réinitialise un cycle de contention.

Le code d'accès peut comporter autant de bits que le nombre de comparaisons qui peuvent être effectuées durant le transfert d'une cellule.

Un multiplexeur/dimultiplexeur ATM comportant un ensemble de 64 cartes a été réalisé. En considérant une distance externe D de 25mm (distance entre cartes au niveau de leur bord externe) et avec typiquement, une distance interne d de 10mm (distance entre cartes à la périphérie de la zone optique) le diamètre de la zone optique ressort environ à 200mm.

Le débit sur la fibre optique étant choisi à 2,5 G Bit/s, le temps de transmission d'une cellule de 53 octets est d'environ 170ns.

Le temps de transmission optique correspondant au temps de propagation de l'onde lumineuse dans l'air entre un émetteur E et un récepteur R disposés dans un même plan via l'ensemble de distribution central est lui de 0,67ns. Compte tenu du temps de calcul au niveau du circuit local d'arbitrage 25, une comparaison sur un bit du code de contention peut être effectuée toutes les 2ns, ce qui autorise un code comportant au plus 84 bits afin de pouvoir effectuer le contrôle entier du code dans le temps de transfert d'une cellule.

Dans le cadre de l'application considérée portant sur un ensemble de 64 cartes (2⁶), il est ainsi possible avec 84 bits de supporter jusqu'à 14 niveaux de priorités. Il doit être noté, qu'en outre, à l'intérieur d'un niveau de priorité, la procédure CSMA/CR attribue également une priorité d'ordre.

Un tel dispositif, de par sa structure même, est capable de cumuler les fonctions de concentrateur fonctionnant selon un mode d'impulsion et de codage (MIC) et celui de multiplexeur ATM. Il est ainsi possible, avec ce dispositif, d'assurer très simplement une transition entre les systèmes à large bande et les commutateurs privés multiservices (ISPBX) existants à ce jour.

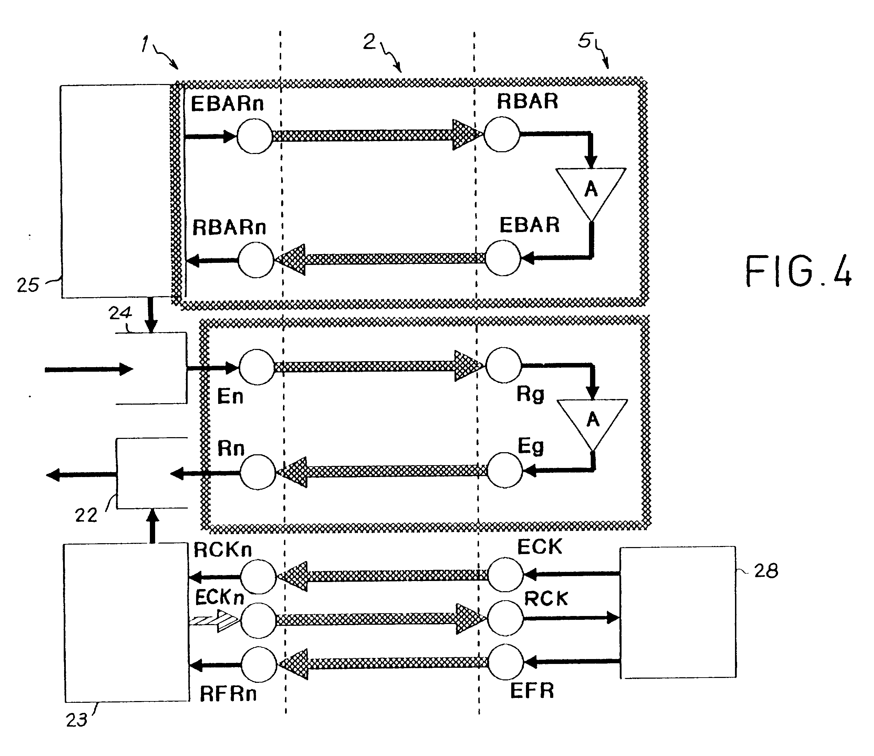

La figure 4 montre un autre exemple d'utilisation et d'accès à un bus optique selon l'invention dans le cadre de la réalisation d'un commutateur fonctionnant en technique ATM.

L'architecture d'un tel commutateur est sensiblement identique à celle d'un multiplexeur/ démultiplexeur ATM. On retrouve au niveau de chaque carte de ce commutateur une horloge locale 23, des piles de départ 24 et d'arrivée 22 et un circuit local d'arbitrage de bus 25 qui présentent un fonctionnement identique à ceux décrits précédemment dans le cadre du multiplexeur ATM. Toutefois, la distribution d'horloge n'est pas reconstituée à partir de signaux d'horloge et de trame contenus dans l'information à démultiplexer mais fournie par une carte déterminée qui génère cette horloge dans son circuit d'horloge locale 23 et envoie par un émetteur local d'horloge ECKn des signaux de référence d'horloge à un circuit central d'horloge 28 qui reçoit ces signaux par l'intermédiaire d'un récepteur central d'horloge RCK. Ce circuit central d'horloge 28 placé au niveau d'un ensemble de distribution central analogue à celui décrit précédemment redistribue alors ces signaux de référence à l'ensemble des cartes par le biais de son émetteur central d'horloge ECK et de son émetteur central de trame EFR. Contrairement à l'application précédente l'ensemble de distribution central ne comporte pas de circuits de réception et de transmission pour assurer une liaison avec une fibre optique mais simplement des circuits d'amplification A pour favoriser la redistribution, vers l'ensemble des cartes, des informations de données ou de contention issues d'une carte déterminée.

Comme précédemment le code de contention utilisé sera le code CSMA/CR mais le temps de transfert d'une cellule étant plus court dans cette application, la pluralité des niveaux de priorités ne sera pas toujours possible. Aussi, il sera nécessaire de recourir à plusieurs bus élémentaires dont la gestion sera réalisée simultanément par un unique circuit local d'arbitrage de bus 25.

Un commutateur ATM comportant 32 cartes a été également réalisé. La distance externe D entre ces cartes est de 70mm et la distance interne d de 10mm.

Le débit sur fibre optique est de nouveau de 2,5 G Bits/s soit un temps de transmission sur cette fibre de 170ns par une cellule ATM de 53 octets. Toutefois, en considérant une succession de cellules arrivant à chaque carte par une fibre optique à ce débit de 2,5 G Bit/s, un temps de transmission d'une cellule sur le bus est alors réduit à environ 5ns avec cet ensemble de 32 cartes.

Dans le cadre de cette réalisation, la capacité de ce commutateur a été augmentée en plaçant des bus optiques en parallèle pour réaliser un bus de données de 53 bits.

Le temps de transmission optique est de 0,33ns, le diamètre de la zone optique étant maintenant de 100mm. En prenant en compte le temps de calcul au niveau du circuit local d'arbitrage, il peut être noté qu'une comparaison sur un bit de code de contention peut maintenant être effectuée toutes les nanosecondes, ce qui, compte tenu du temps de transmission beaucoup plus rapide pour transmettre une cellule, limite le code à au plus 5 bits pour permettre une vérification dans le temps de transfert d'une cellule. Un code de 5 bits permet la différenciation de 32 cartes mais donc avec un seul niveau de priorité. S'il est nécessaire de prévoir plusieurs niveaux de priorité, il faudra alors autant de bus élémentaire de contention que de niveaux désirés. Toutefois, le circuit d'arbitrage de bus devra avoir accès à tous ces bus et, pour chaque bit examiné, la carte ou le module correspondant devra abandonner la procédure d'accès dès qu'il rencontrera une différence sur son niveau de priorité ou sur un niveau supérieur.

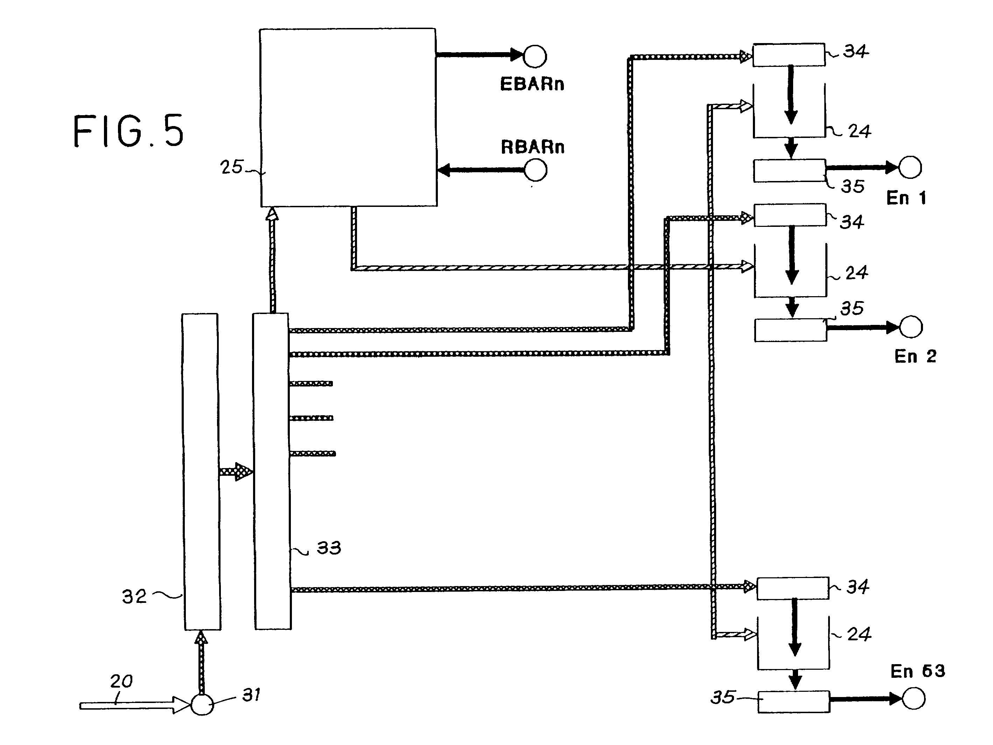

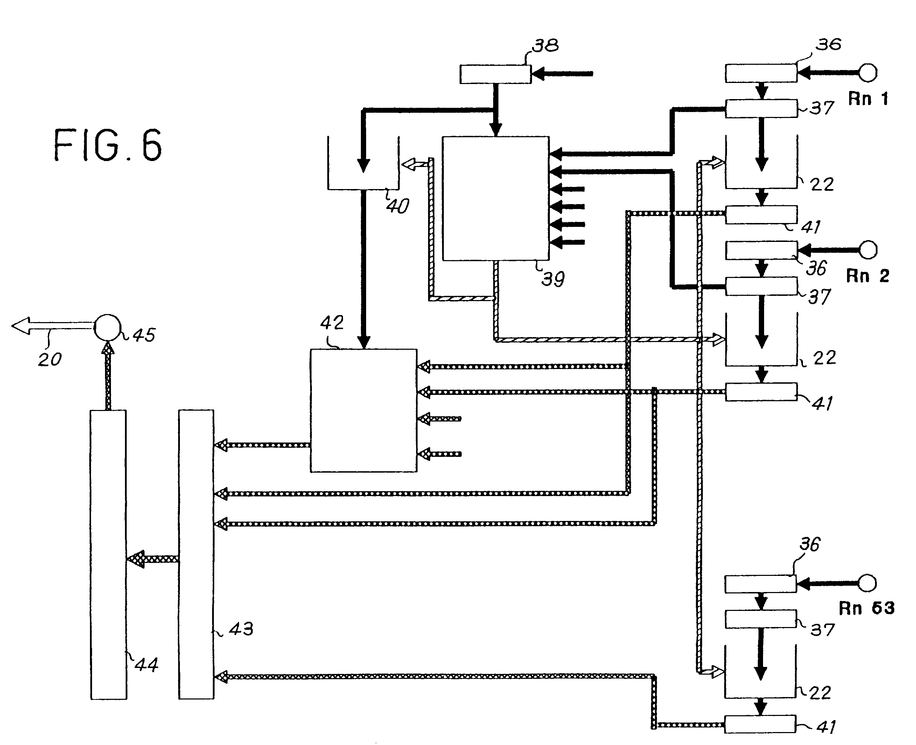

Les figures 5 et 6 montrent en détail des circuits respectivement d'entrée et de sortie des cartes d'un commutateur ATM muni préférentiellement d'un bus parallèle de données de 53 bits. Il peut être noté que cette capacité de bus est particulièrement intéressante car elle permet un maximum de puissance tout en autorisant l'utilisation d'une électronique classique à 8 bits au niveau des registres d'entrée/sortie par exemple.

Il peut aussi être noté qu'une réalisation prenant en compte des capacités de 1,2,4 ou 8 bits, plus généralement tout diviseur entier du nombre total de bits d'une cellule ou d'un multiple de ce nombre de bits, peut être pareillement mise en oeuvre pour tout homme de l'art sans sortir du cadre de l'invention.

La figure 5 représente le circuit d'entrée d'une carte quelconque d'un commutateur ATM.

Les cellules, issues de la fibre optique 20, sont reçues sur un opto-coupleur de réception 31 et transmises sur un registre d'entrée série/parallèle de 53 bits 32. Lorsque ce registre est plein, il est transféré en bloc dans un registre parallèle 33. Cette opération sera effectuée 8 fois durant le transfert d'une cellule ATM qui comme il a été dit est constituée de 53 octets.

Après le premier transfert, le niveau de priorité de la cellule, défini par exemple par un ou plusieurs bits de poids fort, est envoyé au circuit local d'arbitrage 25 pour que ce dernier puisse mémoriser dans une mémoire du type FIFO, non représentée, ce niveau de priorité qui sera exploité lors de la procédure de contention correspondant à la cellule considérée. Alors, les 8 contenus successifs du registre parallèle 33 sont introduits successivement dans 53 registres série/parallèle de 8 bits 34. Les contenus de ces registres sont introduits respectivement, dans 53 piles de départ 24 du type premier entré-premier sorti (FIFO), le premier octet de chaque pile étant transféré, à son tour, dans un registre parallèle/série de 8 bits 35 dès que la procédure de contention autorise l'accès au bus.

Chacun de ces derniers registres 35 est alors transféré en série vers l'émetteur En correspondant pour être émis sur le bus optique.

La figure 6 représente le circuit de sortie d'une carte quelconque d'un commutateur ATM.

53 récepteurs Rn sont connectés respectivement à 53 registres série/parallèle de 8 bits 36. Lorsqu'ils sont pleins, leur contenu est transféré en bloc dans un registre parallèle 37 et l'en-tête de la cellule reçue est alors utilisée en association avec le code de contention issu du circuit local d'arbitrage 25 et transférée, bit après bit, dans un registre de code de 5 bits 38 pour adresser une table des cellules valides 39 qui va déterminer si cette cellule convient à la destination sortante et doit donc être acceptée par la carte considérée. En cas d'acceptation, la table 39 commande le transfert à la fois du code dans une pile de code 40 et des contenus des registres parallèles 37 dans la pile d'arrivée 22, dont le premier octet est transféré, à son tour, dans un registre parallèle/série de 8 bits 41 afin d'adresser une table d'en-tête de sortie 42 qui élabore une nouvelle en-tête à la cellule reçue, par combinaison de son en-tête initiale avec le code issu de la pile de code 40. Un registre parallèle de 53 bits 43 reçoit cette nouvelle en-tête de la table d'en-tête de sortie 42 ainsi que les autres bits directement des registres parallèle-série 41.

Lorsque ce registre est plein, il est transféré en bloc dans un registre parallèle/série de 53 bits 44. L'opération de transfert du registre 41 vers le registre 43 est renouvelée 7 fois, ce qui permet la sérialisation de la cellule reçue qui est envoyée par un opto-coupleur d'émission 45 vers la fibre optique 20.

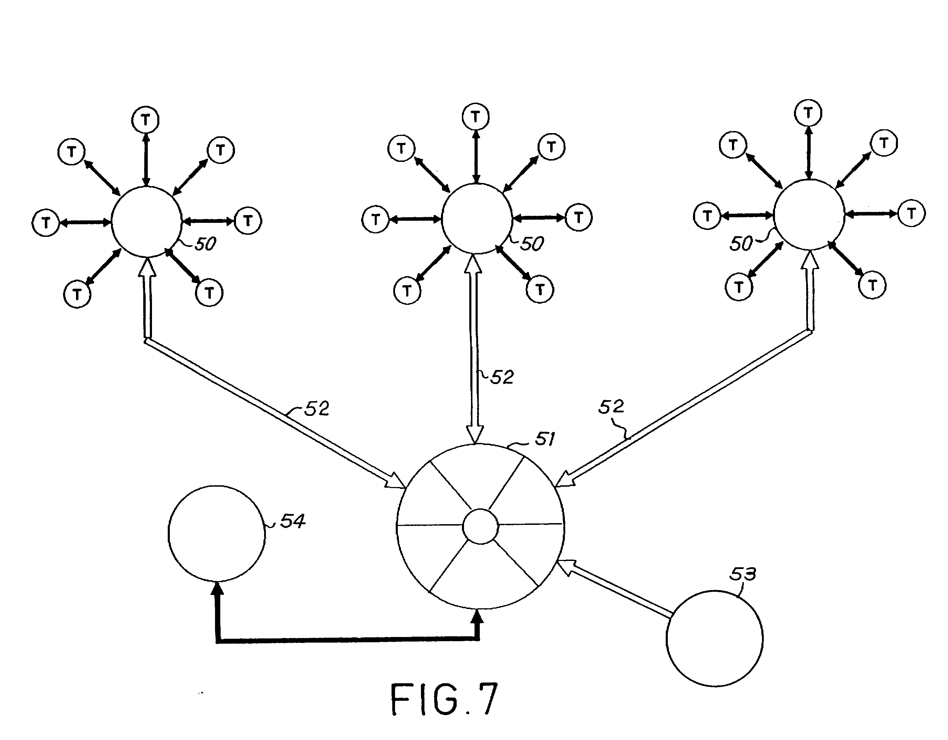

Les deux réalisations précédentes multiplexeur/ démultiplexeur ATM et commutateur ATM permettent de réaliser un commutateur privé multiservices (ISPBX) à large bande dont l'architecture générale sera maintenant décrit au regard de la figure 7.

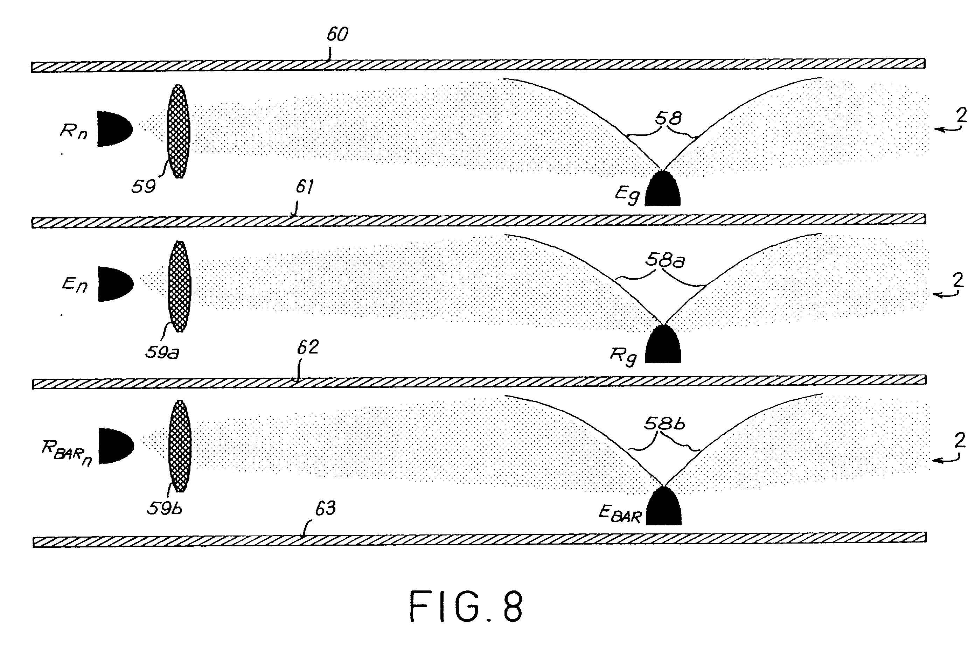

Des terminaux T de différents types (postes téléphoniques, caméras vidéo, systèmes de données, stations multifonctions, réseaux locaux, ...) sont raccordés à des multiplexeurs/démultiplexeurs ATM 50 tels que décrits précédemment. Un commutateur ATM 51 est raccordé par des fibres optiques 52 à ces multiplexeurs/démultiplexeurs 50 ainsi qu'à un réseau public à large bande 53. Un des modules ou cartes de ce commutateur permet de regrouper tous les circuits virtuels transportant les liaisons MIC et d'en assurer la commutation temporelle, de même qu'il permet de faciliter, par exemple, l'accès de toutes les parties de ce commutateur à un centre d'administration de réseau 54. L'ensemble constitue un système particulièrement bien adapté pour réaliser la transition entre les systèmes à large bande et les commutateurs privés à services multiples actuels. Sa réalisation matérielle basée sur le bus optique à architecture circulaire selon l'invention est encore facilitée par la mise en oeuvre aisée d'un tel bus, comme le démontre l'exemple de réalisation de la figure 8.

La figure 8 est un exemple de réalisation d'un bus optique selon l'invention. Un émetteur Eg de l'ensemble de distribution centrale 5 est placé au centre d'un miroir circulaire 58 qui présente une convergence vers la couronne des récepteurs En des différentes cartes 1 disposées à la périphérie de la zone optique 2. Afin de faciliter cette convergence vers les récepteurs périphériques, une lentille 59 peut être utilisée devant chacun d'eux. Un écran supérieur 60 et un écran inférieur 61 parallèles permettent d'assurer une séparation des différents faisceaux optiques issus de différents émetteurs afin d'éliminer tout risque de perte ou d'altération de l'information tout en améliorant la focalisation.

Les émetteurs et récepteurs d'une même carte sont disposés de façon superposée et l'écran inférieur 61 peut constituer l'écran supérieur d'un second faisceau optique reliant un émetteur périphérique En focalisé par une lentille 59a à un récepteur central Rg placé au centre d'un second miroir circulaire 58a présentant également une convergence vers la couronne de la zone optique 2. Un autre écran inférieur 62 vient clore l'espace dans lequel évolue ce second faisceau optique. L'amplificateur A, non représenté, peut avantageusement être disposé au niveau de l'écran inférieur entre l'émetteur et le récepteur central.

Cette disposition en parallèle de bus élémentaires se répète avec le bus de contention ou avec la distribution d'horloge. Dans le cas où les informations de données, le transfert de cellules, sont effectuées de façon parallèle, les multiples émetteurs En et récepteurs Rn sont aussi disposés de manière identique, en cherchant à chaque fois à alterner une couche émetteurs et une couche récepteurs.

## Revendications

1. Bus optique pour la transmission d'informations entre plusieurs cartes (1 à n) ou modules d'un ensemble électronique, chaque carte ayant un ensemble d'émission électro-optique et un ensemble de réception opto-électronique, ce bus comportant un ensemble de distribution central (5) qui réémet simultanément vers l'ensemble de réception (4) de chaque carte (1) les informations qu'il reçoit d'un ensemble d'émission (3) déterminé, ces ensembles d'émission et de réception étant disposés circulairement autour de l'ensemble de distribution central (5), caractérisé en ce que lesdites informations émises par un ensemble d'émission (3) comportent au moins des informations de données et des informations de code, lesdites informations de code étant émises sur le bus selon une loi de contention du type CSMA/CR.

2. Bus optique selon la revendication 1, caractérisé en ce que les ensembles d'émission (3) et de réception (4) disposés circulairement autour de l'ensemble de distribution central (5) comportent au niveau de chaque carte (1) respectivement au moins un émetteur de données (En) et un émetteur de code (EBARn) et au moins un récepteur de données (Rn) et un récepteur du code (RBARn).

3. Bus optique selon la revendication 2, caractérisé en ce que les émetteurs (En,EBARn) et les récepteurs (Rn, RBARn) d'une même carte (1) sont superposés, un récepteur déterminé succèdant à l'émetteur correspondant, et disposés dans un même plan radial parallèle à un axe longitudinal de l'ensemble de distribution central (5).

4. Bus optique selon la revendication 3, caractérisé en ce que l'ensemble de diffusion central (5) comporte au moins un émetteur central de données (Eg) et un émetteur central de code (EBAR) et au moins un récepteur central de données (Rg) et un récepteur central de code (RBAR), chaque émetteur central (Eg,EBAR), respectivement récepteur central (Rg, RBAR), étant placé au centre d'un miroir circulaire (58,58a,58b,58c) présentant une convergence vers la couronne des récepteurs (Rn,RBARn), respectivement des émetteurs (En, EBAR), des différentes cartes (1), un amplificateur (A) permettant en outre l'amplification des informations reçues, par un récepteur central (Rg, RBAR) et destinées à l'émetteur central (Eg, EBAR) correspondant.

5. Bus optique selon la revendication 3 ou la revendication 4, caractérisé en ce que les faisceaux optiques superposés reliant les différents émetteurs (En,EBARn) de chaque carte (1) aux récepteurs centraux (Rg,RBAR) correspondants ainsi que ceux reliant en retour les émetteurs centraux (Eg,EBAR) aux récepteurs (Rn, RBARn) de chaque carte, sont isolés optiquement entre eux par des écrans supérieur et inférieur (60,61,62,63...) parallèles disposés de part et d'autre de chacun de ces faisceaux optiques.

6. Multiplexeur/démultiplexeur dit à mode de transfert asynchrone (ATM) comportant un bus optique selon l'une quelconque des revendications 1 à 5, caractérisé en ce que l'ensemble de distribution central (5) qui reçoit d'une fibre optique (20) des cellules à démultiplexer comporte : un circuit de réception (21) qui d'une part extrait des signaux de synchronisation des cellules reçues et les transmet à toutes les cartes (1) par l'intermédiaire d'au moins un émetteur central de synchronisation (ECK,EFR) et d'autre part diffuse ces cellules à toutes les cartes (1) par l'intermédiaire de l'émetteur central de données (Eg) ; et un circuit de transmission (26) qui reçoit par l'intermédiaire du récepteur central de données (Rg) des cellules à acheminer sur la fibre optique (20) en provenance de l'un quelconque des émetteurs (En) des différentes cartes (1) dont l'émission est validée par un circuit local d'arbitrage de bus (25) présent au niveau de chaque carte (1) et émettant une information de code par son émetteur de code (EBARn).

7. Commutateur dit à mode de transfert asynchrone (ATM) permettant le traitement de données organisées en cellules de p bits et comportant un bus optique selon l'une quelconque des revendications 1 à 5, caractérisé en ce que les ensembles d'émission (3) et de réception (4) comportent respectivement m émetteurs (En) et m récepteurs (Rn) qui coopèrent avec l'ensemble de distribution central (5) pour permettre le transfert en parallèle de m bits d'une cellule, et des piles de départ (24) et d'arrivée (22) du type premier entré - premier sorti (FIFO) permettant respectivement de remplir m registres de sortie (35) de p/m bits reliés à ces émetteurs (En) et de vider m registres d'entrée (36) de p/m bits reliés à ces récepteurs (Rn), m étant un diviseur entier de p ou d'un multiple de p.

8. Commutateur dit à mode de transfert asynchrone (ATM) selon la revendication 7, caractérisé en ce que les cellules comportant 53 octets, le nombre m d'émetteurs (En) ou de récepteurs (Rn) est égal à 53.

9. Commutateur privé multiservices (ISPBX) à large bande comportant au moins un multiplexeur/ démultiplexeur ATM, selon la revendication 6, relié à différents terminaux et un commutateur ATM, selon la revendication 7 ou la revendication 8, relié notamment à un réseau à large bande.

10. Procédé d'accès sur un bus optique selon l'une quelconque des revendications 1 à 5, caractérisé en ce que les informations émises par un ensemble d'émission (3) comportent au moins des informations de données et des informations de code, lesdites informations de code étant émises sur le bus selon une loi de contention du type CSMA/CR.

## Patentansprüche

1. Optischer Bus zur Übertragung von Informationen zwischen mehreren Karten (1 bis n) oder Modulen einer elektronischen Einrichtung, von denen jede Karte eine elektrooptische Sendeeinrichtung und eine optoelektronische Empfangseinrichtung enthält, wobei dieser Bus eine zentrale Verteilungseinrichtung (5) aufweist, die gleichzeitig in Richtung der Empfangseinrichtung (4) jeder Karte (1) die Informationen erneut aussendet, die sie von einer vorbestimmten Sendeeinrichtung (3) empfängt, wobei diese Sende- und Empfangseinrichtungen kreisförmig um die zentrale Verteilungseinrichtung (5) herum angeordnet sind, dadurch gekennzeichnet, daß die vorerwähnten, von der Sendeeinrichtung (3) gesendeten Informationen mindestens Dateninformationen und Codeinformationen enthalten, von denen die Codeinformationen nach Maßgabe einer Konfliktregelung vom Typ CSMA/CR auf den Bus gesendet werden.

2. Optischer Bus nach Anspruch 1, dadurch gekennzeichnet, daß die Sendeeinrichtungen (3) und Empfangseinrichtungen (4), die kreisförmig um die zentrale Verteilungseinrichtung (5) herum angeordnet sind, auf der Höhe jeder Karte (1) mindestens einen Datensender (En) und einen Codesender (EBARn) und mindestens einen Datenempfänger (Rn) und einen Codeempfänger (RBARn) aufweisen.

3. Optischer Bus nach Anspruch 2, dadurch gekennzeichnet, daß die Sender (En, EBARn) und die Empfänger (Rn, RBARn) derselben Karte (1) übereinanderliegen, wobei ein bestimmter Empfänger einem entsprechenden Sender folgt, ferner in derselben Radialebene parallel zur Längsachse der zentralen Verteilungseinrichtung (5) angeordnet sind.

4. Optischer Bus nach Anspruch 3, dadurch gekennzeichnet, daß die zentrale Verbreitungseinrichtung (5) mindestens einen zentralen Datensender (Eg) und einen zentralen Codesender (EBAR) sowie mindestens einen zentralen Datenempfänger (Rg) und einen zentralen Codeempfänger (RBAR) aufweist, wobei jeder zentrale Sender (Eg, EBAR) bzw, jeder zentrale Empfänger (Rg, RBAR) in der Mitte eines kreisförmigen Spiegels (58, 58a, 58b, 58c) angeordnet ist, der in Richtung des Rings der Empfänger (Rn, RBARn) bzw. der Sender (En, EBAR) der verschiedenen Karten (1) eine Konvergenz aufweist, ferner einen Verstärker (A), der außerdem die Verstärkung der Informationen ermöglicht, die über den zentralen Empfänger (Rg, RBAR) empfangen wurden und für einen entsprechenden zentralen Sender (Eg, EBAR) bestimmt sind.

5. Optischer Bus nach Anspruch 3 oder 4, dadurch gekennzeichnet, daß die überlagerten optischen Strahlen, welche verschiedene Sender (En, EBARn) jeder Karte (1) mit den entsprechenden zentralen Empfängern (Rg, RBAR) verbinden, sowie jene, die im Gegenzug die zentralen Sender (Eg, EBAR) mit den Empfängern (Rn, RBARn) jeder Karte verbinden, optisch voneinander getrennt sind durch obere und untere Schirme (60, 61, 62, 63, ...), die parallel beiderseits jedes dieser optischen Strahlen angeordnet sind.

6. Für asynchronen Transfer-Modus (ATM) ausgelegter Multiplexer/Demultiplexer, umfassend einen optischen Bus nach einem der Ansprüche 1 bis 5, dadurch gekennzeichnet, daß die zentrale Verteilungseinrichtung (5), die von einer optischen Faser (20) zu demultiplexende Blöcke empfängt, aufweist: eine Empfangsscshaltung (21), die einerseits aus empfangenen Blöcken Synchronisationssignale extrahiert und sie über mindestens einen zentralen Synchronisationssender (ECK, EFR) an sämtliche Karten sendet, und andererseits diese Blöcke über den zentralen Datensender (Eg) an sämtliche Karten (1) verteilt; und eine Übertragungsschaltung (26), die über den zentralen Datenempfänger (Rg) auf die optische Faser (20) zu leitende Blöcke empfängt, die von irgendeinem der Sender (En) der verschiedenen Karten (1) stammen, dessen Sendevorgang durch eine lokale Bussteuerschaltung (25) gültig gemacht wird, die auf jeder Karte (1) vorhanden ist und mittels ihres Codesenders (EBARn) eine Codeinformation sendet.

7. Für den asynchronen Transfer-Modus (ATM) vorgesehener Umsetzer, der die Behandlung von Daten ermöglicht, die in Blöcken mit p Bits organisiert sind, umfassend einen optischen Bus gemäß einem der Ansprüche 1 bis 5, dadurch gekennzeichnet, daß die Sendeeinrichtung (3) und die Empfangseinrichtung (4) jeweils m Sender (En) bzw. m Empfänger (Rn) aufweisen, die mit der zentralen Verteilungseinrichtung (5) zusammenarbeiten, um den parallelen Transfer von m Bits eines Blocks zu ermöglichen, ferner Ausgangspuffer (24) und Eingangspuffer (22) vom Typ "erster ein" - "erster aus" (FIFO), die es ermöglichen, daß jeweils m Ausgangsregister (35), die mit diesen Sendern (En) verbunden sind, mit p/m Bits gefüllt werden, und m Eingangsregister, die mit diesen Empfängern (Rn) verbunden sind, mit p/m Bits geleert werden, wobei m ein ganzzahliger Teiler von p oder ein Vielfaches von p ist.

8. Umsetzer für den asynchronen Transfer-Modus (ATM) nach Anspruch 7, dadurch gekennzeichnet, daß die Blöcke 53 Bytes enthalten, wobei die Anzahl m der Sender (En) oder Empfänger (Rn) 53 entspricht.

9. Umsetzer für Breitband-Multiservice (ISPBX), umfassend mindestens einen ATM-Multiplexer/Demultiplexer gemäß Anspruch 6, an verschiedene Terminals und einen ATM-Umsetzer gemäß Anspruch 7 oder 8 angeschlossen, insbesondere angeschlossen an ein Breitbandnetz.

10. Zugriffsverfahren für den Zugriff auf einen optischen Bus nach einem der Ansprüche 1 bis 5, dadurch gekennzeichnet, daß die von einer Sendeeinrichtung (3) gesendeten Informationen mindestens Dateninformationen und Codeinformationen enthalten, von denen die Codeinformationen gemäß einer Konfliktregelung vom Typ CSMA/CR auf den Bus gesendet werden.

## Claims

1. An optical bus for transmission of information between a number of cards (1 to n) or modules in an electronic assembly, each card comprising an electro-optical transmission assembly and an opto-electronic receiving assembly, the bus comprising a central distribution assembly (5) which receives information from a given transmission assembly (3) and simultaneously re-transmits it to the receiving assembly (4) of each card (1), the transmission and receiving assemblies being disposed in a circle around the central distribution assembly (5), characterised in that the said information transmitted by a transmission assembly (3) consists at least of data information and code information, the said code information being transmitted on the bus in accordance with a CSMA/CR type retention law.

2. An optical bus according to claim 1, characterised in that the transmission (3) and receiving (4) assemblies disposed in a circle around the central distribution assembly (5) respectively comprise, at the level of each card (1), at least one data transmitter (En) and one code transmitter (EBARn) and at least one data receiver (Rn) and one code receiver (RBARn).

3. An optical bus according to claim 2, characterised in that the transmitters (En, EBARn) and the receivers (Rn, RBARn) of a given card (1) are superposed, a given receiver following the corresponding transmitter, and are disposed in the same radial plane parallel to a longitudinal axis of the central distribution assembly (5).

4. An optical bus according to claim 3, characterised in that the central distribution assembly (5) comprises at least one central data transmitter (Eg) and one central code transmitter (EBAR) and at least one central data receiver (Rg) and one central code receiver (RBAR), each central transmitter (Eg, EBAR) or central receiver (Rg, RBAR) respectively being placed in the centre of a circular mirror (58, 58a, 58b, 58c) which converges towards the ring of receivers (Rn, RBARn) and transmitters (En, EBAR) respectively of the various cards (1), an amplifier (A) also enabling amplification of the information received by a central receiver (Rg, RBAR) and intended for the corresponding central transmitter (Eg, EBAR).

5. An optical bus according to claim 3 or claim 4, characterised in that the superposed optical beams connecting the various transmitters (En, EBARn) of each card (1) to the corresponding central receivers (Rg, RBAR) and the beams making the return connection between the central transmitters (Eg, EBAR) and the receivers (Rn, RBARn) of each card are optically isolated from one another by parallel upper and lower screens (60, 61, 62, 63...) disposed on either side of each said optical beam.

6. An asynchronous transfer mode (ATM) multiplexer/demultiplexer comprising an optical bus according to any of claims 1 to 5, characterised in that the central distribution assembly (5) which receives cells for demultiplexing from an optical fibre (20), comprises a receiving circuit (21) which on the one hand extracts received-cell synchronisation signals and transmits them to all the cards (1) via at least one central synchronisation transmitter (ECK, EFR) and on the other hand distributes the said cells among all the cards (1) via the central data transmitter (Eg); and a transmission circuit (26) which, via the central data receiver (Rg), receives cells for transmission on the optical fibre (20) and coming from any of the transmitters (En) of the various cards (1) for which emission is enabled by a local bus arbitration circuit (25) present at the level of each card (1) and transmitting code information via its code transmitter (EBARn).

7. An asynchronous transfer mode (ATM) switch for processing data organised in cells of p bits and comprising an optical bus according to any of claims 1 to 5, characterised in that the transmission (3) and receiving (4) assemblies respectively comprise m transmitters (En) and m receivers (Rn) which co-operate with the central distribution assembly (5) for the purpose of parallel transfer of m bits of a cell and outgoing (24) and arrival (22) batches of first-in first-out (FIFO) type respectively for filling m p/m bit output registers (35) connected to the said transmitters (En) and emptying m p/m bit input registers (36) connected to the said receivers (Rn), m being a whole-number divisor of p or of a multiple of p.

8. An asynchronous transfer mode (ATM) switch according to claim 7, characterised in that the cells comprise 53 octets, the number m of transmitters (En) and receivers (Rn) being equal to 53.

9. A wide-band multi-service private switch (ISPBX) comprising at least one ATM multiplexer/demultiplexer according to claim 6, connected to various terminals and an ATM switch according to claim 7 or claim 8 and connected particularly to a wide-band network.

10. A method of access to an optical bus according to any of claims 1 to 5, characterised in that the information transmitted by a transmission assembly (3) consists at least of the data information and code information, the said code information being transmitted along the bus in accordance with a CSMA/CR-type retention law.
